(19) Europäisches Patentamt / European Patent Office / Office européen des brevets

(11) **EP 1 916 228 A1**

(12) **EUROPEAN PATENT APPLICATION**
published in accordance with Art. 153(4) EPC

(43) Date of publication:
**30.04.2008 Bulletin 2008/18**

(51) Int Cl.:
*C04B 35/48* (2006.01)    *H01M 8/02* (2006.01)
*H01M 8/12* (2006.01)

(21) Application number: **06781835.1**

(22) Date of filing: **27.07.2006**

(86) International application number:
**PCT/JP2006/314924**

(87) International publication number:
**WO 2007/013567 (01.02.2007 Gazette 2007/05)**

(84) Designated Contracting States:
**CH DE LI**

(30) Priority: **27.07.2005 JP 2005217897**
**30.09.2005 JP 2005288641**

(71) Applicant: **Nippon Shokubai Co.,Ltd.**
**Osaka-shi, Osaka 541-0043 (JP)**

(72) Inventors:
• **HATA, Kazuo**
**Osaka 5650854 (JP)**

• **AIKAWA, Norikazu**
**Hyogo 6711204 (JP)**
• **SHIMOMURA, Masatoshi**
**Himeji-shi,**
**Hyogo 671-1212 (JP)**

(74) Representative: **Müller-Boré & Partner**
**Patentanwälte**
**Grafinger Strasse 2**
**81671 München (DE)**

(54) **METHOD FOR PRODUCING SOLID ELECTROLYTE SHEET AND SOLID ELECTROLYTE SHEET**

(57) The method of the present invention for producing a solid electrolyte sheet for a solid oxide fuel cells is **characterized in** comprising steps of obtaining a large-sized thin zirconia green sheet by molding and drying a slurry containing zirconia particles, a binder, a plasticizer and a dispersion medium; pressing the zirconia green sheet in the thickness direction with a pressure of not less than 10 MPa and not more than 40 MPa; firing the pressed zirconia green sheet at 1200 to 1500°C; and controlling a time period when a temperature is within the range of from 500°C to 200°C to not less than 100 minutes and not more than 400 minutes when cooling the sheet after firing.

Fig.1

**Description**

TECHNICAL FIELD

The present invention relates to a method for producing a solid electrolyte sheet for a solid oxide fuel cell and a solid electrolyte sheet for a solid oxide fuel cell.

BACKGROUND ART

In recent years, fuel cells have drawn attention as a clean energy source and investigations for their practical applications have rapidly been carried out mainly in fields from power generation for domestic use to power generation for business use as well as power generation for automobiles.

As a solid oxide fuel cell, there are those having, as a typical basic structure, a stack formed by layering a large number of cells each composed of a solid electrolyte sheet, an anode on one face side of the sheet and a cathode on the other face side in a vertical direction. In the case of this structure, a high stacking load is applied to each electrolyte sheet and also each electrolyte sheet receives continuous vibration at the time of operation. In the case of a fuel cell for transportation use, the sheet also receives intermittent vibration. As a result, the electrolyte sheet may sometimes be damaged.

Since the fuel cells are connected in series, if one electrolyte sheet is completely damaged, the electric power generation capability of the entire fuel cell is considerably decreased. Therefore, the present inventors proposed the techniques in Japanese Unexamined Patent Publication Nos. 2000-281438, 2001-89252 and 2001-10866. With respect to a solid electrolyte sheet for a solid oxide fuel cell, these techniques aim to improve the strength to stand for the stacking load; to improve the shape properties for decreasing the winding, warping and burring, and preventing cracking; to make the sheet thin for decreasing the ionic conductivity loss; and to optimize the surface roughness for giving printing uniformity of electrodes and improving the adhesiveness.

According to these techniques, a solid electrolyte sheet can be made thin and densified, and the load strength for standing stacking at the time of layering cells and the heat stress resistance as well as adhesiveness and uniformity of electrode printing can be remarkably improved by the shape property improvement, that is, decrease of winding, warping and burring.

There is a description of a technique of heightening the density of a sintered body by putting and pressing a tetragonal scandia-stabilized zirconia powder in a mold, molding the powder by CIP, firing the molded body, and carrying out HIP treatment of the sintered body obtained by the firing at the time of producing a ceramic sintered body in The Extended Abstracts of the eighth symposium on SOFCs in Japan (December 16 to 17, 1999, p. 63). The HIP (Hot-Isostatic-Pressing) treatment, which is a technique for uniformly compressing and densifying by a high temperature gas or the like, is inadequate for producing a large-sized thin sheet, and is not a suitable method for mass production.

Japanese Unexamined Patent Publication No. 8-133847 discloses a technique of heightening the density of a molded body by pressing an unfired ceramic molded body in a specified direction and suppressing unevenness of the firing shrinkage by density amendment. However, the ceramic molded body of this patent publication aims to use it as a material for a multilayered circuit board to be obtained by layering ceramic green sheets and accordingly there is neither a description nor a suggestion of application of the technique for a large-sized thin ceramic sheet.

DISCLOSURE OF THE INVENTION

As described above, the present inventors have made investigations to improve various properties of a solid electrolyte sheet for a solid oxide fuel cell. Accordingly, the present inventors have arrived at a conclusion that in order to prolong the life of a solid oxide fuel cell, it is particularly important to heighten the toughness of a solid electrolyte sheet to prevent transmission of damages to the peripheries even if a portion of the solid electrolyte sheet is damaged.

The techniques for increasing the density by pressing ceramic molded bodies have been known, as described above. However, there is no example of application of the techniques to a large-sized thin sheet, further to a solid electrolyte sheet for a solid oxide fuel cell. Further, even if a ceramic molded body is simply pressed, the toughness is sometimes not improved sufficiently depending on the firing conditions.

In such circumstances, an objective of the present invention is to provide a thin and large-sized solid electrolyte sheet for a solid oxide fuel cell especially excellent in toughness, and production method thereof.

To accomplish the above-mentioned objective, the present inventors have made various investigations particularly on the production conditions for a ceramic sheet. As a result, the present inventors have found that particularly toughness of ceramic sheet can significantly be heightened by carrying out pressing treatment in a ceramic green sheet stage and properly defining the firing conditions and the cooling conditions, and finally completed the present invention.

A method for producing the solid electrolyte sheet for a solid oxide fuel cell according to the present invention is characterized in comprising steps of obtaining a large-sized thin zirconia green sheet by molding and drying a slurry containing zirconia particles, a binder, a plasticizer and a dispersion medium; pressing the zirconia green sheet in the thickness direction with a pressure of not less than 10 MPa and not more than 40 MPa; firing the pressed zirconia green sheet at 1200 to 1500°C; and controlling a time period when a temperature is within the range of from 500°C to 200°C to not less than 100 minutes and not more than 400 minutes when cooling the sheet after firing.

A first solid electrolyte sheet for a solid oxide fuel cell according to the present invention is characterized in having a crystal structure of mainly tetragonal zirconia; an average value of fracture toughness values measured by a Vickers indentation fracture method of not less than 3.6 $MPa \cdot m^{0.5}$; and a coefficient of variation of the fracture toughness value of not more than 20%.

A second solid electrolyte sheet for a solid oxide fuel cell according to the present invention is characterized in having a crystal structure of mainly cubic zirconia; a 0.01 to 4% by mass of alumina; an average value of fracture toughness values measured by a Vickers indentation fracture method of not less than 1.6 $MPa \cdot m^{0.5}$; and a coefficient of variation of the fracture toughness value of not more than 30%.

BRIEF DESCRIPTION OF THE DRAWING

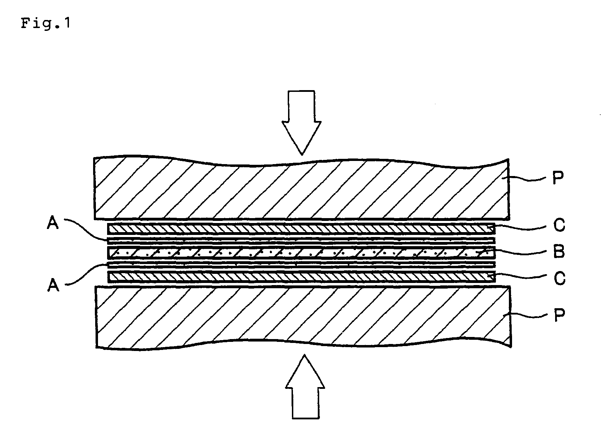

Fig. 1 is a schematic view showing a method of pressing treatment for a green sheet employed in Examples. In the drawing, "A" denotes a PET film; "B" denotes a green sheet; "C" denotes an acrylic plate; and "P" denotes a press plate.

BEST MODE FOR CARRYING OUT THE INVENTION

A method for producing the solid electrolyte sheet for a solid oxide fuel cell according to the present invention is characterized in comprising steps of obtaining a large-sized thin zirconia green sheet by molding and drying a slurry containing zirconia particles, a binder, a plasticizer and a dispersion medium; pressing the zirconia green sheet in the thickness direction with a pressure of not less than 10 MPa and not more than 40 MPa; firing the pressed zirconia green sheet at 1200 to 1500°C; and controlling a time period when a temperature is within the range of from 500°C to 200°C to not less than 100 minutes and not more than 400 minutes when cooling the sheet after firing. Hereinafter, the production method of the present invention will be described in order of the execution.

(1) Slurry preparation step

First, a slurry containing zirconia particles, a binder, a plasticizer and a dispersion medium is prepared.

Examples of Zirconia as a constituent component of the slurry include zirconia containing one or more of alkaline earth metal oxides such as MgO, CaO, SrO and BaO; rare earth element oxides such as $Y_2O_3$, $La_2O_3$, $CeO_2$, $Pr_2O_3$, $Nd_2O_3$, $SM_2O_3$, $Eu_2O_3$, $Gd_2O_3$, $Tb_2O_3$, $Dy_2O_3$, $Ho_2O_3$, $Er_2O_3$ and $Yb_2O_3$; and oxides such as $Sc_2O_3$, $Bi_2O_3$ and $In_2O_3$ as a stabilizer. Further, as other additives, $SiO_2$, $Ge_2O_3$, $B_2O_3$, $SnO_2$, $Ta_2O_5$, $Nb_2O_5$ and the like may be contained.

Particularly, preferable zirconia for assuring strength and toughness at higher levels is stabilized zirconia containing, as a stabilizer, an oxide of at least one element selected from scandium, yttrium and ytterbium. More preferable examples of zirconia are tetragonal zirconia containing, as a stabilizer, 3 to 6% by mole of an oxide of at least one element selected from a group consisting of scandium, yttrium and ytterbium; and cubic zirconia containing, as a stabilizer, 7 to 12% by mole of an oxide of at least one element selected from a group consisting of scandium, yttrium and ytterbium.

The type of the binder to be used for producing the slurry is not particularly limited as long as it is thermoplastic and may properly be selected from conventionally known and used organic binders. Examples of the organic binders include ethylene type copolymers, styrene type copolymers, acrylate and methacrylate type copolymers, vinyl acetate type copolymers, maleic acid type copolymers, polyvinyl butyral resins, vinyl acetal type resins, vinyl formal type resins, vinyl alcohol type resins, waxes, and celluloses such as ethyl cellulose.

In terms of the moldability, the strength, and the thermal decomposition property at the time of firing of the green sheet, particularly preferable binders are polymers obtained by polymerization or copolymerization of at least one kind monomer selected from carboxyl group-containing monomers, for example, alkyl acrylates having alkyl groups with not more than 10 carbon atoms such as methyl acrylate, ethyl acrylate, propyl acrylate, butyl acrylate, isobutyl acrylate, cyclohexyl acrylate and 2-ethylhexyl acrylate; alkyl methacrylates having alkyl groups with not more than 20 carbon atoms such as methyl methacrylate, ethyl methacrylate, butyl methacrylate, isobutyl methacrylate, octyl methacrylate, 2-ethylhexyl methacrylate, decyl methacrylate, dodecyl methacrylate, lauryl methacrylate and cyclohexyl methacrylate; hydroxyalkyl acrylates or hydroxyalkyl methacrylates having hydroxyalkyl groups such as hydroxyethyl acrylate, hydroxypropyl acrylate, hydroxyethyl methacrylate and hydroxypropyl methacrylate; aminoalkyl acrylates or aminoalkyl methacrylates such as dimethylaminoethyl acrylate and dimethylaminoethyl methacrylate; (meth)acrylic acid, maleic acid, and maleic acid half esters such as monoisopropyl malate.

Particularly preferable polymers among these are (meth) acrylate type copolymers having a number average molecular weight of 20,000 to 200,000, and more preferably of 50,000 to 150, 000. These organic binders may be used alone or if necessary, two or more of them may be used in combination. Particularly preferable polymers are polymers of monomers containing 60% by mass or more of isobutyl methacrylate and/or 2-ethylhexyl methacrylate.

The use ratio of the zirconia powder and the binder is preferably 5 to 30 parts by mass, more preferably 10 to 20 parts by mass for the latter to 100 parts by mass of the former. In case that the use amount of the binder is insufficient, the strength and flexibility of a green sheet become insufficient. On the other hand, if it is too much, not only it becomes difficult to adjust the viscosity of the slurry but also it becomes difficult to obtain a homogenous sintered body sheet since the decomposing emission of the binder component is significant and intense at the time of firing.

The plasticizer to be used in the present invention is preferably of polyester type. The pressing treatment carried out in the present invention is not for joining zirconia green sheets one another but for eliminating pores existing in the green sheets to the outside of the green sheets and accordingly obtaining a homogenous and highly tough solid electrolyte sheet. To efficiently exert such an effect, it is preferable that the compressive modulus of the green sheet is proper. However, in the case of a monomer plasticizer such as phthalic acid esters, which are plasticizers used commonly, it becomes difficult to obtain a green sheet having a proper compressive modulus for blooming or the like. On the other hand, to obtain a green sheet with a desirable compressive modulus, polyester type plasticizers are preferable as the plasticizer. In case that a polyester type plasticizer is used, blooming scarcely occurs and pore transfer by pressing can smoothly be caused.

As the polyester type plasticizer, there are those defined by a formula: R-(A-G)n-A-R, wherein "A" denotes a dibasic acid residual group; "R" denotes a terminating agent residual group; "G" denotes a glycol residual group; and "n" denotes a polymerization degree. Examples of the dibasic acid include phthalic acid, adipic acid and sebacic acid. Examples of the terminating agent residual group include lower monovalent alcohols such as methanol, propanol and butanol. The polymerization degree is preferably 10 to 200 and more preferably 20 to 100.

Polyesters to be used as the plasticizer are preferably, for example, phthalic acid type polyesters with a molecular weight of 1000 to 1600; adipic acid type polyesters with a molecular weight of 1000 to 4000; and mixed plasticizers of these. Particularly, phthalic acid type polyesters with a viscosity of about 0.8 to 1 Pa·s at 25°C and adipic acid type polyesters with a viscosity of about 0.2 to 0.6 Pa·s at 25°C are preferable. These plasticizers are good in the stirring compatibility with the zirconia particles at the time of preparing the slurry.

Further, to provide flexibility to the green sheet, plasticizers selected from phthalic acid esters such as dibutyl phthalate and dioctyl phthalate; glycols such as propylene glycol; and glycol ethers may be used.

The additional amount of the plasticizer is preferably 1 to 10 parts by mass to 100 parts by mass of the zirconia particles although it depends on the glass transition temperature of the binder to be used. In case that the amount is less than 1 part by mass, a sufficient effect cannot be caused in some cases. On the other hand, if the amount exceeds 10 parts by mass, the plasticity is rather so high to cause an adverse effect on thermal decomposition at the time of firing. The amount is further preferably not less than 2 parts by mass and not more than 8 parts by mass and particularly preferably not less than 3 parts by mass and not more than 7 parts by mass.

Examples of the solvent to be used for slurry preparation include alcohols such as methanol, ethanol, 2-propanol, 1-butanol and 1-hexanol; ketones such as acetone and 2-butanone; aliphatic hydrocarbons such as pentane, hexane and heptane; aromatic hydrocarbons such as benzene, toluene, xylene and ethylbenzene; and acetic acid esters such as methyl acetate, ethyl acetate and butyl acetate, and these solvents may properly be selected and used. These solvents may be used alone as well as two or more of them may properly be mixed and used. The use amount of these solvents is preferable to be adjusted properly in consideration of the viscosity of the slurry at the time of molding a green sheet and it is preferable to adjust the slurry viscosity in a range of 1 to 20 Pa·s, more preferably in a range of 1 to 5 Pa·s.

In the case of a solid electrolyte sheet having a crystal structure of mainly cubic zirconia, it is preferable to add 0.01 to 4% by mass of alumina in total of the zirconia particles and alumina. Although being inferior in the strength as compared with tetragonal zirconia, cubic zirconia has excellent oxygen ion conductivity and alumina is added to heighten the strength of cubic zirconia. In case that the additional amount is less than 0.01% by mass, the strength improvement effect is insufficient, and if the amount exceeds 4% by mass, although the strength is improved, the oxygen ion conductivity is decreased. That is, in order to keep the excellent oxygen ion conductivity and at the same time to obtain a sheet having high strength properties, alumina is added in the case of a cubic zirconia sheet.

Particularly, the additional amount of alumina is more preferably 0.03 to 3% by mass and even more preferably 0.05 to 2% by mass. In case that the above-mentioned alumina additional amount range is satisfied, the sheet can be provided with strength so excellent as to have a three-point bending strength of not less than 0.3 GPa and a Weibull modulus of not less than 10.

In the case of the solid electrolyte sheet having the crystal structure of mainly tetragonal zirconia, too, alumina may be added to improve the sintering property. In this case, the additional amount of alumina is preferably 0.01 to 2% by mass and more preferably 0.01 to 1% by mass.

Alumina is inevitably contained in an amount of about 0.002 to 0.005% by mass in a raw material zirconia powder and the alumina content in a zirconia sintered body means the total amount of alumina contained in the raw material and alumina to be added.

When the slurry is prepared, to promote deflocculation and dispersion of the zirconia raw material powder, a dispersant consisting of a polymer electrolyte substance such as poly(acrylic acid) and poly(ammonium acrylate), organic acids such as citric acid and tartaric acid, copolymers of isobutylene or styrene with maleic anhydride, their ammonium salts and amine salts, copolymers of butadiene and maleic anhydride and their ammonium salts; and also a surfactant, a defoaming agent and the like may be added based on the necessity.

As a slurry which is a raw material, those containing solid matters with an average particle diameter of 0.08 to 0.8 $\mu$m, preferably 0.1 to 0.4 $\mu$m, and having a 90% by volume diameter of not more than 2 $\mu$m, preferably 0.8 to 1.5 $\mu$m are preferable to be used. In case that a slurry with such a particle size configuration is used, it becomes easy to form fine pores with a very small and uniform size among solid particles in the drying step after formation into a sheet-like shape, and coarse pores do not remain due to proper pressing, and the fine pores are eliminated by sintering to give a sintered body with a high density. In addition, the coefficient of variation of the crystal particle diameter is suppressed to as low as possible and consequently, a sintered body sheet with a fracture toughness value at a high level and a small coefficient of variation can be obtained.

The particle size configuration of the raw material powder and the solid component in the slurry is a value measured by the following method. As a measurement apparatus, is employed a particle size distribution measurement apparatus such as a laser diffraction type particle size distribution measurement apparatus "LA-920" manufactured by Horiba Ltd. The particle size configuration of the raw material powder is measured by first using an aqueous solution obtained by adding 0.2% by mass of sodium metaphosphate in distilled water as a dispersion medium, adding 0.01 to 1% by mass of the raw material powder in 100 mL of the dispersion medium, dispersing the raw material powder by ultrasonic treatment for three minutes, and then carrying out measurement. The particle size configuration of the solid component in the slurry is a value measured by using a solvent with the same composition as the solvent in the slurry as the dispersion medium, adding 0.01 to 1% by mass of respective slurries in 100 mL of the dispersion medium, dispersing the slurry similarly by ultrasonic treatment for three minutes, and then carrying out measurement. The average particle diameter is a particle diameter at the point of 50% in the overall volume of the solid matter in a particle size distribution curve, and the 90% by volume diameter is a particle diameter at the point of 90% in the overall volume of the solid matter in the particle size distribution curve.

To prepare the slurry, a method of kneading and milling a suspension containing the above-mentioned constituent components homogenously by a ball mill or the like may be employed. Depending on the kneading conditions such as the type of the dispersion medium and the additional amount of the dispersion medium, since a portion of the raw material powder may cause secondary agglomeration or another portion may further be milled in the slurry preparation step, the particle size configuration of the raw material powder does not become the same as the particle size configuration of the solid component in the slurry. Therefore, at the time of producing the solid electrolyte sheet of the present invention, it can be said that a method which involves adjusting the particle size configuration of the solid component contained in the slurry before application of the slurry into a sheet like form to the above-mentioned desirable range is a more reliable method.

(2) Green sheet molding step

Next, the obtained slurry is molded into a sheet like form. A molding method is not particularly limited and a conventional method such as a doctor blade method or a calender roll method may be used. Specifically, the raw material slurry is transferred to a coating dam, cast in a uniform thickness on a polymer film by a doctor blade, and dried to obtain a zirconia green sheet. Drying conditions are not particularly limited and drying may be carried out at a constant temperature in a range of, for example, 40 to 150°C or by successive and continuous heating as to 50°C, 80°C and 120°C.

The present invention aims to obtain a large-sized thin solid electrolyte sheet. Accordingly, the thickness of the zirconia green sheet after the drying is preferable to be about 0.1 to 1.2 mm and more preferable to be about 0.12 to 0.6 mm in consideration of the sheet thickness after the firing step.

The compressive modulus of the zirconia green sheet is preferable to be adjusted properly. In the present invention, pressing treatment for the green sheet is carried out to eliminate fine pores existing in the green sheet. As a result, the foams of the zirconia sheet after firing can significantly be suppressed and the fracture toughness value is heightened. In case that the compressive modulus of the green sheet is adjusted to be proper, the efficiency of the pressing treatment can be heightened and the fracture toughness value can be increased, and at the same time, the difference of the fracture toughness values depending on points in the sheet can be suppressed.

The compressive modulus of the zirconia green sheet is preferably not less than 5 MPa and not more than 35 MPa. In case that the compressive modulus is less than 5 MPa, the green sheet may be excessively stretched in the perpendicular direction to the pressing direction even in a moderate pressing condition and the sheet thickness may become easy to be thin by the pressing treatment, and as a result, the size precision may possibly be decreased. On the other hand, if the compressive modulus exceeds 35 MPa, although the size precision of the green sheet is heightened, in order to eliminate the fine pores, the pressing conditions have to be a high pressure, a high temperature and a long time in some cases.

A method for properly adjusting the compressive modulus of the zirconia green sheet may be a method of using a polyester type compound as a plasticizer and adjusting the type and the amount of the compound. More specifically, for example, the type and the amount of a polyester type plasticizer are properly selected mainly in accordance with the type of zirconia particles to be used, and the compressive modulus of the zirconia green sheet is measured on trial and if the measured value is too high, the amount of the plasticizer may be increased.

In the case the zirconia green sheet, which is a precursor of a solid electrolyte sheet, is produced by mass production, it is common to carry out continuous molding and drying and successively cutting or punching the molded sheet in a desired shape. The shape of the sheet is not particularly limited and may be circular, elliptical or rectangular having R, and may also have a hole with a circular shape, an elliptical shape or a rectangular shape having R in such a sheet.

The present invention aims to produce a large-sized solid electrolyte sheet for improving the electric power generation efficiency. Accordingly, the flat part surface area of the zirconia green sheet is preferably about 100 to 900 cm$^2$. The above-mentioned surface area means the entire surface area surrounded with the outer circumferential rim including the area of the hole if the hole exists in the sheet.

(3) Green sheet pressing step

Next, the obtained zirconia green sheet as described above is pressed in the thickness direction with a pressure of not less than 10 MPa and not more than 40 MPa. In case that the firing treatment is carried out after the pores existing in the green sheet are decreased to as low as possible by the pressing treatment, the density and the toughness of the solid electrolyte sheet are remarkably increased. The pressure is more preferably not less than 12 MPa and not more than 30 MPa, and furthermore preferably not less than 15 MPa and not more than 25 MPa. On the other hand, if the pressure is too high, the green sheet may be stretched in the plane direction and may tend to shrink in the thickness direction and it may possibly result in deterioration of the size precision of the electrolyte sheet. Therefore, the upper limit is preferably 40 MPa.

The pressing conditions are not particularly limited and general pressing conditions for sheets or the like may be employed. For example, a common compressive molding apparatus may be used as a pressing apparatus, and the green sheet may be pressed by sandwiching it between hard plates such as acrylic plates. The green sheet may be sandwiched between resin films such as PET films. Further, to prevent bonding of green sheets one another, a polymer film may be inserted between neighboring green sheets and a plurality of green sheets may be pressed simultaneously.

(4) Firing step

Next, the pressed zirconia green sheet is fired at 1200 to 1500°C. In case that firing is carried out at 1200°C or higher, a sufficient firing effect can be exerted and a solid electrolyte sheet with high toughness can be obtained. However, if the firing temperature is too high, the crystal particle diameter of the sheet may sometimes become so large to decrease the toughness, and accordingly the upper limit is defined to be 1500°C.

The heating speed to the firing temperature may properly be adjusted, and the speed may be generally adjusted to about 0.05 to 2°C /minute.

Preferably, the sheet is held in a sintering temperature range of 1300 to 1500°C, and held at a temperature lower than the sintering temperature by 20 to 100°C. The holding duration is preferably 10 minutes to 5 hours, respectively. Under the above-mentioned conditions, the temperature distribution in a firing furnace is narrowed, and the sintering property of the sheet becomes homogenous. As a result, the sintering density becomes homogenous, and the difference of fracture toughness values depending on points in the sheet can be suppressed and its coefficient of variation can also be suppressed.

Further, in the present invention, to suppress the coefficient of variation of the fracture toughness value of the sheet, the temperature distribution in the firing furnace is preferably adjusted to not higher than ±15% and more preferably suppressed to not higher than ±10%.

(5) Cooling step

The cooling condition of the electrolyte sheet after firing is controlled so that the time period when the temperature is within the range of from 500°C to 200°C is not less than 100 minutes and not more than 400 minutes. The reason for determining the lapse time period in cooling when the temperature is within the range of from 500°C to 200°C as described above is as follows.

The crystal structure of zirconia in the solid electrolyte sheet, which is an object of the present invention, changes around a temperature of 500°C. If the temperature is higher than 500°C, the crystal structure is stabilized as being mainly tetragonal or cubic crystal. On the other hand, if the temperature is in a range of not higher than 500°C, the ratio of monoclinic crystal in the crystal structure becomes high. Such a crystal structure change occurs particularly significantly in the case of tetragonal zirconia. Further, in general, with respect to the effect of the crystal structure of a zirconia sheet on the fracture toughness value, it is known that those which have a higher monoclinic crystal ratio have a lower fracture toughness value. Accordingly, in the cooling conditions at the time of producing a sintered body sheet using a common firing furnace, the crystal structure of a solid electrolyte sheet cooled to room temperature tends to contain more monoclinic crystal, and thus have a low fracture toughness value.

On the other hand, in case that the temperature decreasing step in the production of a solid electrolyte sheet is carried out by controlling the cooling conditions so that the lapse time period when the temperature is within the range of from 500°C to 200°C is not more than 400 minutes, the tetragonal or cubic crystal structure formed in a temperature range of not lower than 500°C can be kept almost as it is, and even in the state that it is cooled to room temperature, the sintered body sheet having mainly the tetragonal or cubic crystal structure which is excellent in the fracture toughness can be obtained.

The reason why the lower side temperature at the time of cooling is defined to be 200°C is that when the temperature becomes so low to be lower than 200°C at the time of cooling, the crystal structure change to the monoclinic crystal is no longer caused and the crystal structure of mainly tetragonal crystal is maintained as it is even if the cooling speed becomes more or less slow thereafter, and therefore, there is no need to specially control the temperature decreasing speed.

However, if the lapse time period when the temperature is in the above-mentioned range is less than 100 minutes, thermal stress due to excess quenching is applied to a refractory material or the like of the furnace to shorten the life of the furnace and further thermal stress tends to be caused also in the sintered body sheet, so that it is preferable to attain the lapse time period of at least 100 minutes. The lapse time period when the temperature is within the range is more preferably not less than 100 minutes and not more than 200 minutes. Additionally, the temperature decreasing speed during the period do not have to necessarily be constant in the entire temperature range, and based on the necessity, the cooling speed may be changed step by step or slantingly. However, a stable effect tends to be caused in the case of a method of keeping the temperature decreasing speed approximately constant in the above-mentioned temperature range.

Means for attaining the above-mentioned cooling speed is not particularly limited. In the case of using a common firing furnace or a heating furnace, a method of forcibly cooling by forming a cold air blowing part for forcible cooling in the furnace may be employed. Further, in the case of using a firing furnace having a combustion air blowing port for sintering, it is possible to use the air blowing port also for blowing cold air. At the time of blowing cold air for forcible cooling, it is desirable to install a cold air diffusion member or the like in the blowing port so that the cold air can uniformly be brought into contact with the every corner of the sintered body in the furnace to entirely cool the sintered body as uniformly as possible and thereby it preferably results in suppression of the coefficient of variation of the fracture toughness value in the zirconia sheet plane to as low as possible.

In terms of improvement of the practicality of the solid electrolyte sheet of the present invention as a solid electrolytic membrane for a fuel cell, the thickness is preferably not less than 0.1 mm and not more than 1 mm and more preferably not less than 500 $\mu$m. Further, to surely obtain practical power generation capability, those having a surface area of not less than 50 cm$^2$ and not more than 900 cm$^2$ are preferable and those having a surface area of not less than 100 cm$^2$ and not more than 400 cm$^2$ are more preferable. The shape of the sheet may be any shape such as circular, elliptical or rectangular having R, and may also have a hole with a circular shape, an elliptical shape or a rectangular shape having R in such a sheet. The above-mentioned surface area means the entire surface area surrounded with the outer circumferential rim including the surface area of the hole if the hole exists in the sheet.

The first solid electrolyte sheet for a solid oxide fuel cell according to the present invention is characterized in having a crystal structure of mainly tetragonal zirconia; an average value of fracture toughness values measured by a Vickers indentation fracture method of not less than 3.6 MPa·m$^{0.5}$; and a coefficient of variation of the fracture toughness value of not more than 20%.

The second solid electrolyte sheet for a solid oxide fuel cell according to the present invention is characterized in having a crystal structure of mainly cubic zirconia; a 0.01 to 4% by mass of alumina; an average value of fracture toughness values measured by a Vickers indentation fracture method of not less than 1.6 MPa·m$^{0.5}$; and a coefficient of variation of the fracture toughness value of not more than 30%.

In the production method of the present invention, each of the above-mentioned electrolyte sheets can be produced by using, as zirconia particles, mainly tetragonal zirconia or cubic zirconia and then properly adjusting the cooling conditions after the firing.

The solid electrolyte sheet of the present invention is excellent in the toughness. The toughness means the tenacity of a material and is supposed to be a comprehensive property of a bending property, an impact property and the like. Accordingly, the toughness is supposed to considerably have effect on the durability life of a solid electrolyte membrane for a fuel cell or the like which receives stacking load, vibration, thermal stress and the like.

The fracture toughness value is an index showing the toughness. As the value is higher, it can be said that the toughness is more excellent. In the present invention, the fracture toughness value means a value measured by a Vickers indentation fracture method using a Semi Vickers hardness meter "HSV-20 model" manufactured by Shimadzu Corporation.

The first solid electrolyte sheet according to the present invention has mainly a tetragonal crystal. Specifically, the tetragonal crystal ratio (%) is preferably not less than 85% and more preferably not less than 90%. The tetragonal crystal ratio (%) can be calculated by measuring the respective peak intensities of an x-ray diffraction pattern of the zirconia crystal of the solid electrolyte sheet and carrying out calculation according to the following equality from the respective intensity values.

$$\text{Tetragonal crystal ratio (\%)} = (100 - \text{monoclinic crystal ratio})$$
$$\times\ [\text{t(400)} + \text{t(004)}] \div [\text{t(400)} + \text{t(004)} + \text{c(400)}]$$

[wherein, t(400) denotes the peak intensity of the tetragonal (400) plane; t (004) denotes the peak intensity of the tetragonal (004) plane; and c(400) denotes the peak intensity of the cubic (400) plane]

With respect to the solid electrolyte sheet of the present invention, the ratio of the monoclinic crystal is preferable to be low. Specifically, the monoclinic crystal ratio calculated according to the following equation is preferably not more than 15%, more preferably not more than 10%, and even more preferably not more than 5% to exhibit excellent toughness.

$$\text{Monoclinic crystal ratio (\%)} = [\text{m(111)} + \text{m(-111)}]/[\text{m(111)} +$$
$$\text{m(-111)} + \text{tc(111)}] \times 100$$

[wherein, m(111) denotes the peak intensity of the monoclinic (111) plane; m(-111) denotes the peak intensity of the monoclinic (-111) plane; and tc(111) denotes the peak intensity of the tetragonal and cubic (111) plane, respectively]

The first solid electrolyte sheet according to the present invention has an average value of fracture toughness values measured by a Vickers indentation fracture method of not less than 3.6 MPa·m$^{0.5}$ and a coefficient of variation of the fracture toughness value of not more than 20%. Having such a fracture toughness value, the sheet can show sufficient durability even if it is used as a solid electrolyte sheet for a solid oxide fuel cell.

Further, the sheet having a coefficient of variation of the fracture toughness value in the sheet plane suppressed to 20% or lower, preferably 15% or lower, and more preferably 10% or lower can be provided with a stable and excellent load bearing characteristic without causing local stress convergence in the case of practical use as a solid electrolytic membrane for a solid oxide fuel cell. Such a homogenous solid electrolyte sheet can be obtained by cooling the entire face as uniform as possible after the firing step.

A more preferable embodiment of the first tetragonal solid electrolyte sheet according to the present invention may be a solid electrolyte sheet having a number of closed pores not smaller than 1 $\mu$m$^2$ observed in a cross section in the thickness direction of the sheet of not more than 10 and preferably not more than 8 per 1000 $\mu$m$^2$, and the each pore surface area of the all closed pores observed in the same cross section of not more than 5 $\mu$m$^2$ and preferably not more than 2 $\mu$m$^2$. It is because a sheet having a less number of closed pores in a cross section and smaller closed pores has less inner defects and causes less bad effects on the fracture toughness value.

The average diameter of the crystal particles in the first tetragonal solid electrolyte sheet according to the present invention is preferably in a range of 0.1 to 0.8 $\mu$m and the coefficient of variation of the crystal particles is desirably not more than 30%. In case that the average diameter of the crystal particles is very small and less than 0.1 $\mu$m, since the sintering is too insufficient to give a sufficient density, it is impossible to give satisfactory strength. On the other hand, if the average diameter of the crystal particles is so large that it exceeds 0.8 $\mu$m, the strength and high temperature durability tend to be insufficient. If the coefficient of variation of the crystal particles exceeds 30%, the distribution of the crystal particle diameter in the solid electrolyte sheet is widened to worsen the strength and high temperature durability, and at the same time, a Weibull modulus tends to be lowered to 10 or less. Herein, the Weibull modulus is regarded as a constant reflecting the degree of the strength unevenness and a sheet which is low in this value is evaluated as a sheet with significant unevenness and lacking reliability.

To obtain the tetragonal solid electrolyte sheet with such a crystal particle diameter, it is preferable to use, as a raw material slurry at the time of producing a green sheet to be a precursor, a slurry having an average particle diameter of the solid matter in the slurry in a range of 0.15 to 0.8 $\mu$m, more preferably 0.20 to 0.40 $\mu$m, and a 90% by volume particle diameter in a range of 0.6 to 2 $\mu$m and more preferably 0.8 to 1.2 $\mu$m.

The second solid electrolyte sheet according to the present invention has mainly a cubic crystal. Specifically, the respective peak intensities of an x-ray diffraction pattern of the zirconia crystal of the solid electrolyte sheet are measured; and the cubic crystal ratio (%) is calculated by carrying out calculation according to the following equality from the respective intensity values; and the cubic crystal ratio (%) is preferably not less than 90%, more preferably not less than 95%, and even more preferably not less than 97%.

$$\text{Cubic crystal ratio (\%)} = (100 - \text{monoclinic crystal ratio}) \times$$
$$[c(400)] \div [t(400) + t(004) + c(400)]$$

[wherein, c(400) denotes the peak intensity of the cubic (400) plane; t (400) denotes the peak intensity of the tetragonal (400) plane; t (004) denotes the peak intensity of the tetragonal (004) plane]

The second tetragonal solid electrolyte sheet according to the present invention contains 0.01 to 4% by mass of alumina. Owing to alumina, excellent oxygen ion conductivity by cubic zirconia can be retained and at the same time the strength can be heightened.

An average value of fracture toughness values of the second cubic solid electrolyte sheet according to the present invention, which is measured by a Vickers indentation fracture method, is not less than 1.6 MPa·m$^{0.5}$, and a coefficient of variation of the fracture toughness value is not more than 30%. With such a fracture toughness value, the sheet can show sufficient durability even if being used as a solid electrolyte sheet for a solid oxide fuel cell.

Further, a sheet having a coefficient of variation of the fracture toughness value in the sheet plane suppressed to 30% or lower, preferably 25% or lower, and more preferably 20% or lower can be provided with a stable and excellent load bearing characteristic without causing local stress convergence in the case of practical use as a solid electrolytic membrane for a solid oxide fuel cell. Such a homogenous solid electrolyte sheet can be obtained by cooling the entire face as uniformly as possible after the firing step.

A more preferable embodiment of the second cubic solid electrolyte sheet according to the present invention may be a solid electrolyte sheet having a number of closed pores not smaller than 1 $\mu$m$^2$ observed in a cross section in the thickness direction of the sheet of not more than 10 and preferably not more than 8 per 1000 $\mu$m$^2$, and the each pore surface area of the all closed pores observed in the same cross section of not more than 5 $\mu$m$^2$ and preferably not more than 2 $\mu$m$^2$. It is because a sheet having a less number of closed pores in a cross section and smaller closed pores has less inner defects and causes less bad effects on the fracture toughness value.

The average diameter of the crystal particles in the second cubic solid electrolyte sheet according to the present invention is preferably in a range of 2 to 5 $\mu$m, and the coefficient of variation of the crystal particles is desirably not more than 40%. In case that the average diameter of the crystal particles is very small and less than 2 $\mu$m, since the sintering is too insufficient to give a sufficient density, it is impossible to give satisfactory strength. On the other hand, if the average diameter of the crystal particles is so large that it exceeds 5 $\mu$m, the strength and high temperature durability tend to be insufficient. If the coefficient of variation of the crystal particles exceeds 40%, the distribution of the crystal particle diameter in the solid electrolyte sheet is widened to worsen the strength and high temperature durability, and at the same time, the Weibull modulus tends to be lowered to 10 or less.

To obtain the tetragonal solid electrolyte sheet with such a crystal particle diameter, it is preferable to use, as a raw material slurry at the time of producing a green sheet to be a precursor, a slurry having an average particle diameter of the solid matter in the slurry in a range of 0.08 to 0.8 $\mu$m, and a 90% by volume particle diameter of not more than 2 $\mu$m.

Examples

Hereinafter, the present invention will be described more specifically with reference to Examples, however it is not intended that the present invention be limited to the illustrated Examples; and an appropriate modification can be made without departing from the purport described above and below, and such a modification should be considered within the technical scope of the present invention.

The evaluation methods of the strength, fracture toughness values and the like of the solid electrolyte sheets of Examples and Comparative Examples are as follows.

Measurement of compressive modulus of green sheet:

The compressive modulus of a green sheet was measured according to JIS K7181. Specifically, using a all-purpose material testing apparatus (manufactured by INSTRON, Model 4301), a green sheet with a diameter of 49.6 mm as a test sample was set on a compression jig with a diameter of 50 mm. Compressive stress was applied to the green sheet at a compressing speed of 0.5 cm/minute at room temperature, and a value was calculated by dividing $\sigma^2$ - $\sigma^1$: the difference of stress at two arbitrary points by $\varepsilon^2$ - $\varepsilon^1$: the difference of the strain values at respective points. Same measurement was carried out for 5 green sheets and the average value was defined as the compressive modulus.

Measurement of bending strength:

A test sheet was cut in strips with a width of 5 mm and a length of 50 mm with a diamond cutter to obtain test pieces. Twenty test pieces were used and subjected to three-point bending strength measurement according to JIS R1601. Specifically, measurement was carried out using a all-purpose material testing apparatus (manufactured by INSTRON, Model 4301) equipped with a three-point bending strength testing jig in conditions of a span of 20 mm and a cross head speed of 0.5 mm/minute, and the average value was defined as the three-point bending strength. Next, a Weibull modulus was calculated by a least-square method from the obtained measurement results of twenty points.

Fracture toughness value and its coefficient of variation:

A measurement method of the fracture toughness value is defined in JIS Standards, however, an IF method which can be applied to a sheet like molded body was employed in the present invention. Specifically, using a Vickers hardness meter "HSV-20 model" manufactured by Shimadzu Corporation, the hardness was measured at five arbitrary points of the respective ten test sheets at a load of 2500 gf in the case of tetragonal electrolyte sheets and at a load of 500 gf in the case of cubic electrolyte sheets. The average value of the resulting measured values at 50 points was defined as the fracture toughness value. The maximum value and the minimum value of the measured values of the 50 points were also measured. The coefficient of variation was calculated according to the following equation.

```
Coefficient of variation = (standard deviation of measured

values/average value) × 100 (%)
```

Crystal particle diameter:

The surface of each test sheet was photographed by a scanning electron microscope and the sizes of all of the crystal particles in a visible field of a photograph with 15000 magnification were measured by a micrometer caliper. Based on these measured values, the average value of the crystal particle diameters, the maximum value, the minimum value, and the coefficient of variation were obtained. At that time, grains which existed in the rim part of the photographic visible field and therefore were not seen entirely were excluded from the measurement objects.

Number of closed pores not smaller than 1 $\mu$m$^2$:

Each test sheet was arbitrarily cut. In the cross section, ten arbitrary sites were observed by a SEM at 1000 magnification and the number of closed pores not smaller than 1 $\mu$m$^2$ was investigated to calculate the average value and the value was converted into the number of the closed pores per 1000 $\mu$m$^2$ to calculate the number of closed pores.

Simulated load-bearing test:

A test zirconia sheet was set on a sample stand of a all-purpose material testing apparatus (manufactured by INSTRON, Model 4301), and felt (alumina type, thickness: 0. 5 mm) simulated as a sealing material was put on an inner range at a 5 mm distance from the circumferential rim, and a flat plate was further put thereon, and successively a load of 0.02 MPa was applied at a cross head speed of 0.5 mm/minute. The load-bearing test was repeated three times for every twenty test sheets, and the evaluation was carried out on the basis of the ratio of the number of sheets broken by cracking or the like according to the following standard. excellent: not higher than 2%; good: not higher than 10%; and not good: higher than 10%

Measurement of conductivity

A platinum wire with a diameter of 0.2 mm was wound at 4 points at 1 cm intervals on each test piece similar to that used for the bending strength measurement, and a platinum paste was applied, dried and fixed at 100°C to obtain electric current/voltage terminals. Both ends of the test piece on which the platinum wire was wound were sandwiched with alumina plates in a manner that the platinum wire was closely attached to the test piece. In the state in which a load of about 500 g was applied, the test piece was exposed to 800°C, and constant electric current of 0.1 mA was applied to two terminals on the outer side, and the voltage in two terminals on the inner side was measured by a DC four-terminal method using a digital multi-meter (manufactured by Advantest Corporation, trade name: TR6845 Model).

Monoclinic crystal ratio:

The peak intensities of the monoclinic (111) plane and (-111) plane and the peak intensity of the tetragonal and cubic (111) plane were measured from an x-ray diffraction pattern of zirconia crystal of each solid electrolyte sheet. The monoclinic crystal ratio (%) was calculated from the respective intensity values according to the following equation.

$$\text{Monoclinic crystal ratio (\%)} = [m(111) + m(-111)]/[m(111) + m(-111) + tc(111)] \times 100$$

[wherein, m(111) denotes the peak intensity of the monoclinic (111) plane; m (-111) denotes the peak intensity of the monoclinic (-111) plane; and tc(111) denotes the peak intensity of the tetragonal and cubic (111) plane]

As an x-ray diffraction apparatus, was employed an x-ray diffraction apparatus "RU-300" manufactured by Rigaku Denki Co. and equipped with a wide angle goniometer and a curved monochrometer. An x-ray of CuKα1 of 50 kV/300 mA was radiated. The obtained diffraction peak was subjected to smoothing treatment, back-ground treatment, Kα2 removal, and the like.

Cubic crystal ratio:

The peak intensities were measured from an x-ray diffraction pattern of zirconia crystal of each solid electrolyte sheet in the same manner as those in measurement of the monoclinic crystal ratio, and the cubic crystal ratio (%) was calculated from the respective intensity values according to the following equation.

$$\text{Cubic crystal ratio (\%)} = (100 - \text{monoclinic crystal ratio}) \times [c(400)] \div [t(400) + t(004) + c(400)]$$

[wherein, c(400) denotes the peak intensity of the cubic (400) plane; t(400) denotes the peak intensity of the tetragonal (400) plane; and t(004) denotes the peak intensity of the tetragonal (004) plane]

Measurement of sheet thickness:

Measurement was carried out at each ten arbitrary points of 10 test sheets using a micrometer, and the average value and scale deflection were calculated.

Measurement of shape:

Measurement was carried out at each ten arbitrary points of 10 test sheets using a micrometer caliper, and the average value and scale deflection were calculated.

Example 1

A pot mill made of nylon and containing balls made of zirconia with a diameter of 10 mm was loaded with 100 parts by mass of a 3.0 mol% yttria-stabilized zirconia powder (manufactured by Sumitomo Osaka Cement Co., Ltd., trade name: OZC-3Y), 0.5 parts by mass of an alumina powder (manufactured by Showa Denko K. K., trade name: AL-160SG), 14 parts by mass of a methacrylic acid ester type binder (number average molecular weight: 30,000; glass transition temperature: -8°C), 2 parts by mass of adipic acid type polyester as a plasticizer (manufactured by Dainippon Ink and Chemicals, Inc., trade name: Polycizer W-320), and 50 parts by mass of a mixed solvent of toluene/2-propanol= 4/1 by mass ratio as a dispersion medium. The mixture was kneaded at 50 rpm for 48 hours to obtain a slurry for puroducing a green sheet.

A portion of the slurry was taken and diluted with a mixed solvent of toluene/2-propanol = 4/1 by mass ratio, and the particle size distribution of the solid component in the slurry was measured using a laser diffraction type particle size distribution measurement apparatus "LA-920" manufactured by Horiba Ltd. As a result, the average particle diameter (50% by volume diameter) was 0.3 $\mu$m and the 90% by volume diameter was 1.1 $\mu$m.

The slurry was concentrated and defoamed to adjust the viscosity to 2 Pa·s at 23°C. After the slurry was filtered by a 200-mesh filter, the slurry was applied to a polyethylene terephthalate sheet by a doctor blade method and dried at 100°C to obtain a green sheet with a thickness of about 0.1 mm. The green sheet was cut into a circular shape with a diameter of 49.6 mm and the elastic compression moduli of 10 green sheets were measured using a all-purpose apparatus (manufactured by INSTRON, Model 4301) equipped with a compression jig with a diameter of 50 mm. As a result, the average value was 20.8 MPa.

After the green sheet which was not yet cut was cut into a circular shape with a diameter of about 155 mm, the sheet was pressed at 16 MPa for 1 minute using a monoaxial compressive molding apparatus (manufactured by Shinto Metal Industries, Ltd., Model S-37.5) and then fired. At that time, the temperature increasing speed at 1100°C or more was adjusted to be 1 deg/min or lower, and the sheet was held at 1370°C for 1 hour, and held at a sintering temperature of 1420°C for 3 hours. At the time of cooling, the condition was controlled so that the lapse time period when the temperature was within a range of from 500°C to 200°C was 120 minutes. The cooling speed control during the time was carried out by introducing air at room temperature to the firing furnace and using a programmed temperature adjustment meter manufactured by RKC Instrument Inc. According to the method, 3.0 mol% yttria-stabilized zirconia sheet with a circular shape of 120 mm in diameter and 0.1 mm in thickness was obtained.

Examples 2 to 6

Zirconia sheets of Examples 2 to 6 were obtained with the compositions and the production conditions as shown in Table 1 in a similar manner as in Example 1. In the table, "x$\phi$" means a circular shape with a diameter of x mm and "y$\square$" means a square with one side of y mm.

Table 1

| | Example | 1 | 2 | 3 | 4 | 5 | 6 |
|---|---|---|---|---|---|---|---|
| | Composition | 3YSZ | 3YSZ | 4YSZ | 4ScSZ | 4.5ScSZ | 5ScSZ |
| | Alumina content (% by mass) | 0.5 | None | 0.05 | 0.2 | 0.1 | 0.5 |
| | Plasticizer | Adipic acid type polyester | Adipic acid type polyester | Phthalic acid type polyester | Adipic acid type polyester | Phthalic acid type polyester | Adipic acid type polyester |
| Slurry | Average particle diameter ($\mu$m) | 0.3 | 0.3 | 0.4 | 0.5 | 0.5 | 0.6 |
| | 90% by volume diameter ($\mu$m) | 1.1 | 1.0 | 1.2 | 1.1 | 1.2 | 1.4 |
| | Compressive modulus of green sheet (MPa) | 20.8 | 25.4 | 12.1 | 17.9 | 9.0 | 6.8 |
| Pressing condition | Pressure (MPa) × time period (min) | 16 × 1 | 15 × 2 | 18 × 1 | 12 × 2 | 30 × 1.5 | 32 × 1 |

(continued)

| | | Example | 1 | 2 | 3 | 4 | 5 | 6 |
|---|---|---|---|---|---|---|---|---|
| Firing condition | | Holding condition (temperature $\times$ time period (hrs)) | 1370°C $\times$ 1 | 1350°C $\times$ 2 | 1350°C $\times$ 0.5 | 1320°C $\times$ 1 | 1300°C $\times$ 1 | 1350°C $\times$ 1 |
| | | Sintering temperature (°C) $\times$ holding period (hrs) | 1420°C $\times$ 3 | 1400°C $\times$ 2 | 1380°C $\times$ 2 | 1400°C $\times$ 3 | 1380°C $\times$ 2 | 1375°C $\times$ 3 |
| | | Cooling period (min) at 500→200°C | 120 | 100 | 180 | 150 | 240 | 330 |
| Sheet | | Shape and scale deflection (mm) | 120φ $\pm$ 0.6 | 300□ $\pm$ 1.0 | 100φ $\pm$ 0.5 | 120φ $\pm$ 0.7 | 120φ $\pm$ 0.8 | 250□ $\pm$ 1.0 |
| | | Thickness shape and (mm) scale deflection (mm) | 0.1 $\pm$ 0.07 | 0.15 $\pm$ 0.09 | 0.08 $\pm$ 0.007 | 0.12 $\pm$ 0.01 | 0.1 $\pm$ 0.08 | 0.14 $\pm$ 0.011 |

The results of the measurements for properties such as fracture toughness values of Examples 1 to 6 are shown in Table 2.

Table 2

[Table 2]

| Example | 1 | 2 | 3 | 4 | 5 | 6 |
|---|---|---|---|---|---|---|
| Bending strength | | | | | | |
| Three-point bending strength (GPa) | 1.1 | 1.0 | 0.98 | 0.95 | 0.97 | 0.92 |
| Weibull modulus | 14 | 15 | 15 | 14 | 12 | 13 |
| Fracture toughness value (MPa·m$^{0.5}$) | | | | | | |
| Average value | 4.2 | 4.3 | 4.1 | 4.1 | 3.7 | 3.8 |
| Maximum value | 4.4 | 4.5 | 4.3 | 4.3 | 4.0 | 4.1 |
| Minimum value | 3.9 | 4.0 | 3.8 | 3.7 | 3.4 | 3.6 |
| Coefficient of Variation (%) | 17 | 15 | 12 | 20 | 15 | 22 |
| Crystal particle diameter ($\mu$m) | | | | | | |
| Average value | 0.41 | 0.38 | 0.37 | 0.40 | 0.38 | 0.38 |
| Maximum value | 0.52 | 0.44 | 0.42 | 0.47 | 0.48 | 0.45 |
| Minimum value | 0.36 | 0.31 | 0.25 | 0.29 | 0.19 | 0.32 |
| Coefficient of Variation (%) | 18 | 16 | 27 | 24 | 29 | 21 |

(continued)

| Crystal particle diameter ($\mu$m) Average number of closed pores not smaller than 1 $\mu$m$^2$ | 4.8 | 5.6 | 6.9 | 5.1 | 8.7 | 7.6 |
|---|---|---|---|---|---|---|
| Simulated load-bearing test | excellent | excellent | excellent | excellent | good | good |
| 800°C conductivity (S/cm) | 0.0098 | 0.010 | 0.011 | 0.013 | 0.015 | 0.016 |
| Monoclinic crystal ratio (%) | 2 | 3 | 6 | 12 | 15 | 18 |

According to the above-mentioned results, the solid electrolyte sheets produced by the method of the present invention have excellent properties in fracture toughness and the like.

Comparative Examples 1 to 5

Zirconia sheets of Comparative Examples 1 to 5 were obtained with the compositions and the production conditions as shown in Table 3 in a similar manner as in Example 1. In Table 3, underlines show the production conditions out of the scope of the present invention.

Table 3

| | Comparative Example | 1 | 2 | 3 | 4 | 5 |
|---|---|---|---|---|---|---|
| | Composition | 3YSZ | 3YSZ | 3YSZ | 4ScSZ | 4ScSZ |
| | Alumina content (% by mass) | 0.002 | 5 | 0.3 | 0.005 | 10 |
| | Plasticizer | Dibutyl phthalate | Dibutyl phthalate | Dioctyl phthalate | Dibutyl phthalate | Dioctyl phthalate |
| Slurry | Average particle diameter ($\mu$m) 90% by volume diameter ($\mu$m) | 0.4 1.2 | 0.7 2.3 | 0.5 1.7 | 0.9 3.5 | 0.8 2.9 |
| | Compressive modulus of green sheet (MPa) | 3.7 | 2.4 | 46.3 | 53.2 | 1.2 |
| Pressing condition | Pressure (MPa) $\times$ time period (min) | No pressing | 3 $\times$ 1.5 | 100 $\times$ 1 | No pressing | 80 $\times$ 2 |

(continued)

| | Comparative Example | 1 | 2 | 3 | 4 | 5 |
|---|---|---|---|---|---|---|
| Firing condition | Holding condition (temperature × time period (hrs)) | No holding | 1300°C × 2 | No holding | 1000°C × 1 | 1350°C × 1 |
| | Sintering temperature (°C) × holding period (hrs) | 1400°C × 3 | 1420°C × 3 | 1380°C × 3 | 1200°C × 3 | 1420°C × 2 |
| | Cooling period (min) at 500→200°C | <u>60</u> | <u>600</u> | <u>750</u> | <u>600</u> | <u>900</u> |
| Sheet | Shape and scale deflection (mm) | 120φ ± 0.8 | 120φ ± 0.6 | 120φ + 1.7 120φ - 0.7 | 100φ ± 0.6 | 100φ + 1.5 100φ - 0.6 |
| | Thickness shape and scale deflection (mm) | 0.3 ± 0.02 | 0.3 ± 0.02 | 0.3 ± 0.04 | 0.2 ± 0.02 | 0.2 ± 0.8 |

The results of the measurements for properties such as fracture toughness values of Comparative Examples 1 to 5 are shown in Table 4.

Table 4

| Comparative Example | 1 | 2 | 3 | 4 | 5 |
|---|---|---|---|---|---|
| Bending strength Three-point bending strength (GPa) Weibull modulus | 0.31 24 | 0.34 14 | 0.32 16 | 0.26 11 | 0.37 12 |
| Fracture toughness value (MPa·m$^{0.5}$) Average value Maximum value Minimum value Coefficient of Variation (%) | 2.8 3.2 2.5 31 | 2.3 2.8 1.9 36 | 2.6 3.0 2.3 21 | 1.9 2.2 1.7 13 | 2.4 2.9 2.1 18 |
| Crystal particle diameter ($\mu$m) Average value Maximum value Minimum value Coefficient of Variation (%) | 0.37 0.62 0.23 37 | 0.47 0.69 0.18 39 | 0.41 0.58 0.19 32 | 0.20 0.27 0.095 41 | 0.52 0.70 0.15 43 |
| Average number of closed pores not smaller than 1 $\mu$m$^2$ | 38.7 | 24.1 | 28.5 | 52.3 | 29.0 |
| Simulated load-bearing test | not good | not good | not good | not good | not good |
| 800°C conductivity (S/cm) | 0.0091 | 0.0086 | 0.0092 | 0.0094 | 0.0090 |

(continued)

| Crystal particle diameter (μm) | | | | | |
|---|---|---|---|---|---|
| Monoclinic crystal ratio (%) | 25 | 43 | 36 | 21 | 40 |

According to the above-mentioned results, the solid electrolyte sheets produced by the methods in the conditions out of the scope of the present invention were inferior in fracture toughness and the like to the sheets within the scope of the present invention.

Examples 7 to 12

Zirconia sheets of Examples 7 to 12 were obtained with the compositions and the production conditions as shown in Table 5 in a similar manner as in Example 6.

Table 5

| | Example | 7 | 8 | 9 | 10 | 11 | 12 |
|---|---|---|---|---|---|---|---|
| | Composition | 8YSZ | 8YSZ | 10YSZ | 10Sc1YSZ | 10Sc1CeSZ | 11YbSZ |
| | Alumina content (% by mass) | 0.5 | 1.0 | 0.05 | 1.5 | 0.3 | 1.8 |
| | Plasticizer | Adipic acid type polyester | Adipic acid type polyester | Phthalic acid type polyester | Adipic acid type polyester | Phthalic acid type polyester | Adipic acid type polyester |
| Slurry | Average particle diameter (μm) | 0.4 | 0.5 | 0.3 | 0.12 | 0.5 | 0.09 |
| | 90% by volume diameter (μm) | 1.3 | 1.5 | 1.2 | 1.0 | 1.4 | 0.8 |
| | Compressive modulus of green sheet (MPa) | 15.7 | 8.1 | 21.9 | 24.6 | 11.9 | 28.7 |
| Pressing condition | Pressure (MPa) × time period (min) | 15 × 2 | 25 × 1.5 | 40 × 1 | 15 × 2 | 30 × 1 | 12 × 2 |
| Firing condition × Sintering | Holding condition (temperature × time period (hrs)) | 1325°C × 1 | 1350°C × 0.5 | 1300°C × 1.5 | 1320°C × 2 | 1320°C × 1 | 1420°C × 2 |
| | temperature (°C) holding period (hrs) | 1400°C × 3 | 1420°C × 2 | 1400°C × 3 | 1380°C × 4 | 1370°C × 5 | 1460°C × 1.5 |
| | Cooling period (min) at 500→200°C | 360 | 300 | 240 | 300 | 180 | 150 |

(continued)

| | Example | 7 | 8 | 9 | 10 | 11 | 12 |
|---|---|---|---|---|---|---|---|
| Sheet | Shape and scale deflection (mm) | 120φ ± 0.8 | 150φ ± 0.9 | 100φ ± 0.5 | 300□ ± 1.0 | 120φ ± 0.6 | 250□ ± 1.0 |
| | Thickness shape and | 0.3 ± 0.025 | 0.25 ± 0.02 | 0.2 ± 0.016 | 0.35 ± 0.031 | 0.24 ± 0.021 | 0.4 ± 0.0323 |

The results of the measurements for properties such as fracture toughness values of Examples 7 to 12 are shown in Table 6.

Table 6

| Example | 7 | 8 | 9 | 10 | 11 | 12 |
|---|---|---|---|---|---|---|
| Bending strength<br>Three-point bending strength (GPa)<br>Weibull modulus | 0.38<br>13 | 0.34<br>14 | 0.32<br>16 | 0.40<br>15 | 0.36<br>12 | 0.37<br>12 |
| Fracture toughness value (MPa·m$^{0.5}$)<br>Average value<br>Maximum value<br>Minimum value<br>Coefficient of Variation (%) | 1.9<br>2.1<br>1.7<br>15 | 1.9<br>2.2<br>1.6<br>23 | 1.6<br>1.9<br>1.4<br>21 | 2.0<br>2.2<br>1.7<br>18 | 1.7<br>1.9<br>1.5<br>13 | 1.9<br>2.3<br>1.6<br>27 |
| Crystal particle diameter ($\mu$m)<br>Average value<br>Maximum value<br>Minimum value<br>Coefficient of Variation (%) | 3.2<br>4.3<br>1.8<br>26 | 3.9<br>7.0<br>2.4<br>32 | 3.1<br>4.1<br>1.9<br>21 | 3.6<br>5.2<br>2.3<br>24 | 2.9<br>3.8<br>0.9<br>29 | 4.3<br>7.2<br>2.1<br>37 |
| Average number of closed pores not smaller than 1 $\mu$m$^2$ | 6.2 | 6.7 | 9.0 | 4.3 | 8.2 | 3.8 |
| Simulated load-bearing test | excellent | excellent | good | excellent | good | good |
| 800°C conductivity (S/cm) | 0.038 | 0.035 | 0.032 | 0.1 | 0.12 | 0.09 |
| Cubic crystal ratio (%) | 99 | 99 | 99.9 | 98 | 99 | 97 |

According to the above-mentioned results, the solid electrolyte sheets produced by the method of the present invention have excellent properties in fracture toughness and the like.

Comparative Examples 6 to 10

Zirconia sheets of Comparative Examples 6 to 10 were obtained with the compositions and the production conditions as shown in Table 7 in a similar manner as in Example 6. In Table 7, underlines show the production conditions out of the scope of the present invention.

Table 7

| | Comparative Example | 6 | 7 | 8 | 9 | 10 |
|---|---|---|---|---|---|---|
| | Composition | 8YSZ | 8YSZ | 8YSZ | 10YSZ | 10YSZ |
| | Alumina content (% by mass) | 0.002 | 5 | 0.3 | 15 | 8 |

(continued)

| | Comparative Example | 6 | 7 | 8 | 9 | 10 |
|---|---|---|---|---|---|---|
| | Plasticizer | Dibutyl phthalate | Dibutyl phthalate | Dioctyl phthalate | Dibutyl phthalate | Dioctyl phthalate |
| Slurry | Average particle diameter (μm) | 0.4 | 0.7 | 0.5 | 0.9 | 0.8 |
| | 90% by volume diameter (μm) | 1.2 | 2.3 | 1.7 | 3.5 | 2.9 |
| | Compressive modulus of green sheet (MPa) | 3.7 | 2.4 | 46.3 | 53.2 | 1.2 |
| Pressing condition | Pressure (MPa) × time period (min) | No pressing | 3 × 1.5 | 100 × 1 | No pressing | 80 × 2 |
| Firing condition | Holding condition (temperature × time period (hrs)) | No holding | 1300°C × 2 | No holding | 1000°C × 1 | 1320°C × 1 |
| | Sintering temperature (°C) temperature (°C) × holding period (hrs) | 1400°C × 3 | 1420°C × 3 | 1400°C × 3 | 1480°C × 4 | 1450°C × 5 |
| | Cooling period (min) at 500→200°C | 90 | 600 | 90 | 600 | 60 |
| Sheet | Shape and scale deflection (mm) | 120φ ± 0.7 | 120φ ± 0.8 | 120φ + 1.9 | 100φ ± 0.6 | 100φ + 1.6 |
| | Thickness shape and scale deflection (mm) | 0.3 ± 0.027 | 0.3± 0.025 | 0.3 ± 0.03 | 0.2 ± 0.017 | 0.2 ± 0.02 |

The results of the measurements for properties such as fracture toughness values of Comparative Examples 6 to 10 are shown in Table 8.

Table 8

| Comparative Example | 6 | 7 | 8 | 9 | 10 |
|---|---|---|---|---|---|
| Bending strength<br>Three-point bending strength (GPa)<br>Weibull modulus | <br>0.29<br>36 | <br>0.31<br>28 | <br>0.27<br>33 | <br>0.23<br>21 | <br>0.024<br>25 |
| Fracture toughness value (MPa·m$^{0.5}$)<br>Average value<br>Maximum value<br>Minimum value<br>Coefficient of Variation (%) | <br>1.3<br>1.9<br>0.8<br>32 | <br>1.4<br>2.1<br>0.9<br>36 | <br>1.3<br>2.0<br>0.7<br>37 | <br>1.2<br>1.7<br>0.6<br>41 | <br>2.0<br>2.4<br>1.2<br>38 |
| Crystal particle diameter ($\mu$m)<br>Average value<br>Maximum value<br>Minimum value<br>Coefficient of Variation (%) | <br>6.5<br>11.4<br>2.6<br>54 | <br>5.4<br>10.9<br>1.8<br>47 | <br>5.8<br>9.6<br>1.5<br>42 | <br>9.6<br>15.7<br>2.4<br>55 | <br>7.1<br>13.3<br>2.0<br>48 |
| Average number of closed pores not smaller than 1 $\mu$m$^2$ | 31.4 | 19.8 | 11.7 | 36.2 | 15.4 |
| Simulated load-bearing test | not good | not good | not good | not good | not good |
| 800°C conductivity (S/cm) | 0.032 | 0.026 | 0.031 | 0.020 | 0.023 |
| Cubic crystal ratio (%) | 98 | 92 | 99 | 83 | 89 |

As the above-mentioned results, the solid electrolyte sheets produced by the methods in the conditions out of the scope of the present invention were inferior in fracture toughness and the like to the sheets within the scope of the present invention.

INDUSTRIAL APPLICABILITY

The solid electrolyte sheet obtained by the method of the present invention is provided with 99.0% or higher density to a theoretical density and high toughness by being produced through the pressing, firing and cooling steps defined by the present invention. Accordingly, the solid electrolyte sheet of the present invention is remarkably valuable in industrial fields as a sheet usable for a solid electrolyte sheet with high durability for a solid oxide fuel cell.

**Claims**

1.  A method for producing a solid electrolyte sheet for a solid oxide fuel cell, **characterized in** comprising steps of obtaining a large-sized thin zirconia green sheet by molding and drying a slurry containing zirconia particles, a binder, a plasticizer and a dispersion medium;
    pressing the zirconia green sheet in the thickness direction with a pressure of not less than 10 MPa and not more than 40 MPa;
    firing the pressed zirconia green sheet at 1200 to 1500°C; and
    controlling a time period when a temperature is within the range of from 500°C to 200°C to not less than 100 minutes and not more than 400 minutes when cooling the sheet after firing.

2.  The method according to claim 1, for producing the solid electrolyte sheet with a thickness of 0.1 to 1 mm and a flat part surface area of 50 to 900 cm$^2$.

3.  The method according to claim 1 or 2, comprising a step of adjusting a compressive modulus of the zirconia green sheet before pressing treatment to be not less than 5 MPa and not more than 35 MPa.

4.  The method according to any one of claims 1 to 3, using a polyester type plasticizer as the plasticizer.

5.  The method according to any one of claims 1 to 4, wherein holding the sheet at a sintering temperature in a range of 1300 to 1500°C and holding the sheet at a temperature lower than the sintering temperature by 20 to 100°C in the step of firing the zirconia green sheet.

6. The method according to claim 5, wherein the respective holding periods are 10 minutes to 5 hours.

7. A solid electrolyte sheet for a solid oxide fuel cell, **characterized in** having
a crystal structure of mainly tetragonal zirconia;
an average value of fracture toughness values measured by a Vickers indentation fracture method of not less than 3.6 MPa·m$^{0.5}$; and
a coefficient of variation of the fracture toughness value of not more than 20%.

8. The solid electrolyte sheet according to claim 7, having a monoclinic crystal ratio calculated by the following equation of less than 20%:

$$\text{Monoclinic crystal ratio (\%)} = [m(111) + m(-111)]/[m(111) + m(-111) + tc(111)] \times 100$$

[wherein, m(111) denotes a peak intensity of a monoclinic (111) plane; m(-111) denotes a peak intensity of a monoclinic (-111) plane; and tc(111) denotes a peak intensity of a tetragonal and cubic (111) plane].

9. The solid electrolyte sheet according to claim 7 or 8, having an average diameter of crystal particles in a range of 0.1 to 0.8 μm and a coefficient of variation of a crystal particle diameter of not more than 30%.

10. The solid electrolyte sheet according to any one of claims 7 to 9, wherein the zirconia particles consists of stabilized zirconia containing 3 to 6% by mole of an oxide of at least one element selected from a group consisting of scandium, yttrium and ytterbium as a stabilizer.

11. A solid electrolyte sheet for a solid oxide fuel cell, **characterized in** having
a crystal structure of mainly cubic zirconia;
a 0.01 to 4% by mass of alumina;
an average value of fracture toughness values measured by a Vickers indentation fracture method of not less than 1.6 MPa·m$^{0.5}$; and
a coefficient of variation of the fracture toughness value of not more than 30%.

12. The solid electrolyte sheet according to claim 11, having an average diameter of crystal particles in a range of 2 to 5 μm and a coefficient of variation of a crystal particle diameter of not more than 40%.

13. The solid electrolyte sheet according to claim 11 or 12, wherein the zirconia particles consists of stabilized zirconia containing 7 to 12% by mole of an oxide of at least one element selected from a group consisting of scandium, yttrium and ytterbium as a stabilizer.

Fig.1

P

A — C
B
A — C

P

## INTERNATIONAL SEARCH REPORT

| | International application No. |
|---|---|
| | PCT/JP2006/314924 |

A. CLASSIFICATION OF SUBJECT MATTER
*C04B35/48(2006.01)i, H01M8/02(2006.01)i, H01M8/12(2006.01)i*

According to International Patent Classification (IPC) or to both national classification and IPC

B. FIELDS SEARCHED

Minimum documentation searched (classification system followed by classification symbols)
C04B35/48-35/493, H01M8/02, H01M8/12

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho  1971-2006    Toroku Jitsuyo Shinan Koho    1994-2006

Electronic data base consulted during the international search (name of data base and, where practicable, search terms used)
Science Direct, JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| Y<br>A | JP 4-37646 A  (Director General, Agency of Industrial Science and Technology), 07 February, 1992 (07.02.92), Claims 1, 3, 5, 6, 9; page 3, upper right column, lines 2 to 6; page 4, lower left column, line 10 to lower right column, line 20; page 8, upper right column, line 1 to lower left column, line 7; page 9, upper left column, lines 18 to 19; page 10, lower left column, line 10 to lower right column, line 2 (Family: none) | 1,2,4<br>3,5-13 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>12 September, 2006 (12.09.06) | Date of mailing of the international search report<br>26 September, 2006 (26.09.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/314924

C (Continuation). DOCUMENTS CONSIDERED TO BE RELEVANT

| Category* | Citation of document, with indication, where appropriate, of the relevant passages | Relevant to claim No. |
|---|---|---|
| Y | JP 4-101360 A (Matsushita Electric Industrial Co., Ltd.), 02 April, 1992 (02.04.92), Claims; page 3, upper right column, lines 4 to 16 & US 5314508 A | 1,2,4 |
| Y | JP 60-54972 A (Sumitomo Electric Industries, Ltd.), 29 March, 1985 (29.03.85), Claim 1; page 2, upper right column, line 19 to lower left column, line 1 (Family: none) | 1,2,4 |
| Y | WO 2004/034492 A1 (Nippon Shokubai Co., Ltd.), 22 April, 2004 (22.04.04), Claims; page 19, line 26 to page 20, line 13 & EP 1562244 A1 | 2,4 |
| Y | JP 2002-15757 A (Nippon Shokubai Co., Ltd.), 18 January, 2002 (18.01.02), Par. Nos. [0001], [0054], [0068], [0072] (Family: none) | 4 |
| Y A | JP 8-2965 A (Shinagawa Refractories Co., Ltd.), 09 January, 1996 (09.01.96), Claims; Par. Nos. [0001], [0002], [0043], [0056], [0057], [0067], [0068] & US 5656564 A      & EP 0705803 A1 & WO 1995/029141 A1 | 7,8 1-6,9-13 |
| Y | JP 11-35323 A (Nippon Shokubai Co., Ltd.), 09 February, 1999 (09.02.99), Claims; Par. Nos. [0009], [0011] & US 6068828 A          & EP 0884280 A1 | 7,8 |
| A | JP 9-283160 A (Meidensha Corp.), 31 October, 1997 (31.10.97), Claims; Par. Nos. [0024] to [0029] (Family: none) | 9,12 |
| A | JP 2003-22822 A (Nippon Shokubai Co., Ltd.), 24 January, 2003 (24.01.03), Claim 1; Par. Nos. [0017], [0023], [0036], [0039] (Family: none) | 1-13 |
| E,A | JP 2006-228565 A (Nippon Shokubai Co., Ltd.), 31 August, 2006 (31.08.06), Claims 1, 2, 5; Par. No. [0027] (Family: none) | 1-13 |

Form PCT/ISA/210 (continuation of second sheet) (April 2005)

**INTERNATIONAL SEARCH REPORT**

International application No.

PCT/JP2006/314924

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The special technical feature of the invention of claim 1 is a method for producing a solid electrolyte sheet for solid oxide fuel cells containing every step defined in claim 1.

Meanwhile, the special technical feature of the invention of claim 7 is a solid electrolyte sheet for solid oxide fuel cells which has a crystal structure mainly composed of a tetragonal zirconia while having an average fracture toughness of not less than $3.6 \text{ MPa} \cdot \text{m}^{0.5}$ and a variation coefficient of the fracture toughness of not more than 20%; and the special technical feature of the invention of claim 11 is a solid electrolyte sheet for solid oxide fuel cells which has a crystal structure  (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2006/314924

Continuation of Box No.III of continuation of first sheet(2)

mainly composed of a cubic zirconia, while containing 0.01-4% by mass of alumina and having an average fracture toughness of not less than 1.6 MPa·m$^{0.5}$ and a variation coefficient of the fracture toughness of not more than 30%.

Since the solid electrolyte sheets of the inventions of claims 7 and 11 are not products obtained by the method of the invention of claim 1, there is no technical relationship among the inventions of claims 1, 7, 11 involving one or more of the same or corresponding special technical features.

Consequently, these inventions are not considered so linked as to form a single general inventive concept.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000281438 A
- JP 2001089252 A
- JP 2001010866 A
- JP 8133847 A

### Non-patent literature cited in the description

- *The Extended Abstracts of the eighth symposium on SOFCs in Japan,* 16 December 1999, 63